# EUROPÄISCHE PATENTANMELDUNG

(11) **EP 4 063 193 A1**
(43) Veröffentlichungstag der Anmeldung: **28.09.2022**
(21) Anmeldenummer: 21164701.1
(22) Anmeldetag: 24.03.2021
(51) Int. Cl.: B60Q 1/00, B60S 1/54

(54) **KRAFTFAHRZEUGSCHEINWERFER**

(71) Anmelder: ZKW Group GmbH, 3250 Wieselburg (AT)
(72) Erfinder: Leonhartsberger, Rudolf, 3393 Zelking (AT); Pitterle, Georg, 3241 Kirnberg an der Mank (AT); Jackl, Christian, 3250 Wieselburg (AT); Bierwipfl, Christoph, 3376 St. Martin-Karlsbach (AT); Popp, Roman, 3251 Purgstall an der Erlauf (AT); Kreuzer, Andreas, 4400 Steyr (AT); Stamminger, Robert, 3371 Neumarkt an der Ybbs (AT)
(74) Vertreter: Patentanwaltskanzlei Matschnig & Forsthuber OG

(57) **Zusammenfassung**

Kraftfahrzeugscheinwerfer (1), umfassend ein Gehäuse (2), eine das Gehäuse (2) abschließende Abschlussscheibe (3) und eine Blende (4), welche an der Abschlussscheibe (3) befestigt ist, wobei die Blende (4) eine der Abschlussscheibe (3) zugewandte Rückseite und eine der Abschlussscheibe (3) abgewandte Vorderseite aufweist, wobei die Blende (4) derart ausgestaltet ist, dass zwischen der Blende (4) und der Abschlussscheibe (3) ein erster Hohlraum (5a) ausgebildet ist, wobei der Kontakt zwischen der Blende (4) und der Abschlussscheibe (3) abgedichtet ist, wobei die Blende (4) eine erste Durchgangsöffnung (4a) aufweist, welche in den ersten Hohlraum (5a) führt, wobei die erste Durchgangsöffnung (4a) derart ausgebildet ist, dass sich durch eine auf die Blende (4) strömende Anströmluft, in einem Bereich vor der ersten Durchgangsöffnung (4a), ein Staudruck ausbildet, wobei der Staudruck das Eindringen von ersten Partikeln, welche eine erste Korngrößenverteilung aufweisen, über die erste Durchgangsöffnung (4a) in den ersten Hohlraum (5a) verhindert.

## Beschreibung

Die Erfindung betrifft einen Kraftfahrzeugscheinwerfer, umfassend:
- ein Gehäuse,
- eine das Gehäuse abschließende Abschlussscheibe, welche eine dem Gehäuse zugewandte Innenseite und eine dem Gehäuse abgewandte Außenseite aufweist,
- eine Blende, welche an der Außenseite der Abschlussscheibe befestigt ist, wobei die Blende eine der Außenseite der Abschlussscheibe zugewandte Rückseite und eine der Außenseite der Abschlussscheibe abgewandte Vorderseite aufweist, wobei die Blende derart ausgestaltet ist, dass zwischen der Blende und der Abschlussscheibe ein erster Hohlraum ausgebildet ist, wobei die Rückseite der Blende eine Kontaktfläche aufweist, über welche die Blende die Außenseite der Abschlussscheibe kontaktiert, wobei zwischen der Kontaktfläche und der Außenseite der Abschlussscheibe ein Dichtungselement angeordnet ist, welches dazu eingerichtet ist, den Kontakt zwischen der Blende und der Außenseite der Abschlussscheine luftdicht abzuschließen.

Die Erfindung betrifft ferner ein Kraftfahrzeug, umfassend einen Kraftfahrzeugscheinwerfer.

Aus dem Stand der Technik sind Kraftfahrzeugscheinwerfer bekannt, welche eine Abschlussscheibe und eine an der Abschlussscheibe befestigte Blende aufweisen. Um Verunreinigungen der Blende und/oder der Abschlussscheibe zu entfernen, weisen die im Stand der Technik bekannten Blenden meist Reinigungsvorrichtungen, wie beispielsweise Scheibenwischer oder Sprühdüsen, auf. Nachteiligerweise sind diese Reinigungsvorrichtungen jedoch lediglich dazu ausgebildet, eine bereits bestehende Verunreinigung zu entfernen, was meist einen zeitintensiven Prozess darstellt.

Die Aufgabe der vorliegenden Erfindung besteht darin, die Nachteile des Standes der Technik zu lindern bzw. zu beseitigen. Die Erfindung setzt sich daher insbesondere zum Ziel, einen Kraftfahrzeugscheinwerfer zu schaffen, bei welchem die Verunreinigung einer Außenseite des Kraftfahrzeugscheinwerfers minimiert wird.

Diese Aufgabe wird durch einen Kraftfahrzeugscheinwerfer mit den Merkmalen von Anspruch 1 gelöst. Bevorzugte Ausführungen sind in den abhängigen Ansprüchen angegeben.

Erfindungsgemäß weist die Blende eine erste Durchgangsöffnung auf, welche in den ersten Hohlraum führt, wobei die erste Durchgangsöffnung derart ausgebildet ist, dass sich durch eine auf die Blende strömende Anströmluft, in einem Bereich vor der ersten Durchgangsöffnung, ein Staudruck ausbildet, wobei der Staudruck das Eindringen von ersten Partikeln, welche eine erste Korngrößenverteilung aufweisen, über die erste Durchgangsöffnung in den ersten Hohlraum verhindert.

Dadurch ergibt sich der Vorteil, dass die Außenseite der Abschlussscheibe, insbesondere jener Bereich, welcher sich hinter der ersten Durchgangsöffnung der Blende befindet, frei von einer Verschmutzung durch erste Partikel bleibt. Die ersten Partikel können Schmutzpartikel jeglicher Art sein und sind insbesondere in der Luft enthalten. Bevorzugt kann durch den Staudruck der erste Hohlraum im Wesentlichen frei von ersten Partikeln gehalten werden. Die erste Durchgangsöffnung kann rund, oval, eckig oder schlitzförmig ausgestaltet sein. Vorzugsweise weist die erste Durchgangsöffnung eine Fläche auf, welche kleiner als die Fläche der Vorderseite der Blende, bevorzugt 3-mal oder 5-mal oder 10-mal kleiner, ist. Der Staudruck kann sich in einem Bereich vor der ersten Durchgangsöffnung und vor der Vorderseite der Blende, bevorzugt als eine Art Druckbarriere, ausbilden, welcher insbesondere anströmende Partikel von der ersten Durchgangsöffnung weglenkt. Die auf die Abschlussscheibe und die Blende wirkende Anströmluft kann Wind in der Umgebung des Kraftfahrzeugscheinwerfers und/oder Fahrtwind sein, wobei der Fahrtwind insbesondere bei einer Bewegung des Kraftfahrzeugscheinwerfers entstehen kann. Vorzugsweise überdeckt die Blende weniger als die Hälfte, bevorzugt weniger als ein Viertel, der Gesamtfläche der Außenseite Abschlussscheibe, wobei die Blende insbesondere an einer Unterseite der Abschlussscheibe angeordnet ist.

Es kann vorgesehen sein, dass die Blende derart ausgestaltet ist, dass zwischen der Blende und der Abschlussscheibe ein zweiter Hohlraum ausgebildet ist, welcher vertikal unterhalb des ersten Hohlraums angeordnet ist, wobei die Blende eine zweite Durchgangsöffnung aufweist, welche vertikal unterhalb der ersten Durchgangsöffnung angeordnet ist und in den zweiten Hohlraum führt, wobei der erste und der zweite Hohlraum über einen Leitkanal miteinander verbunden sind, wobei die erste Durchgangsöffnung, der Leitkanal und die zweite Durchgangsöffnung dergestalt ausbildet und dazu eingerichtet sind, dass zweite Partikel, welche eine zweite Korngrößenverteilung, welche größer als die erste Korngrößenverteilung ist, aufweisen und über die erste Durchgangsöffnung in den ersten Hohlraum eindringen, gravitationsbedingt durch den Leitkanal in den zweiten Hohlraum, zu der zweiten Durchgangsöffnung, geleitetet werden und über die zweite Durchgangsöffnung aus dem zweiten Hohlraum ausdringen. Dadurch ergibt sich der Vorteil, dass zweite Partikel, welche zu groß sind um durch den Staudruck aus dem ersten Hohlraum ferngehalten werden, über die zweite Durchgangsöffnung aus dem Bereich zwischen der Abschlussscheibe und der Blende entfernt werden können. Die zweite Durchgangsöffnung kann rund, oval, eckig oder schlitzförmig ausgestaltet sein. Vorzugsweise weist die zweite Durchgangsöffnung eine Fläche auf, welche kleiner als die Fläche der Vorderseite der Blende, bevorzugt 3-mal oder 5-mal oder 10-mal kleiner, ist. Der erste und zweite Hohlraum sowie der Leitkanal sind vorzugsweise als ein zusammenhängendes Volumen ausgebildet, welches zumindest zwei, vorzugsweise genau zwei, Durchgangsöffnungen aufweist, welche jeweils in das zusammenhängende Volumen führen.

Es kann vorgesehen sein, dass der zweite Hohlraum als Strömungskanal ausgebildet ist, welcher sich von der zweiten Durchgangsöffnung zumindest bis zur Abschlussscheibe hin erstreckt, wobei der Strömungskanal eine Verjüngung aufweist, wobei der Leitkanal mit dem Strömungskanal an der Verjüngung luftleitend verbunden ist, um eine Venturidüse auszubilden, welche dazu eingerichtet ist, an der ersten Durchgangsöffnung eine Sogwirkung zu erzeugen, um Partikel der ersten und/oder zweiten Korngrößenverteilung aus dem ersten Hohlraum abzusaugen. Dadurch ergibt sich der Vorteil, dass Partikel, welche trotz Staudrucks dennoch in den ersten Hohlraum gelangen, ohne einer zusätzlichen Absaugvorrichtung, lediglich durch die Sogwirkung der Venturidüse und in Kombination mit der Gravitation, aus dem ersten Hohlraum abgesaugt bzw. befördert werden können, wodurch die Verschmutzung der Abschlussscheibe weiter minimiert werden kann. Vorzugsweise verläuft der Hohlraum vertikal unterhalb der Abschlussscheibe bis zu einem Auslassbereich, welcher vertikal unterhalb des Gehäuses angeordnet ist, wobei die ersten und/oder zweiten Partikel über den Auslassbereich aus dem zweiten Hohlraum geleitet werden können.

Es kann vorgesehen sein, dass die Abschlussscheibe transparent ausgebildet ist. Die Abschlussscheibe ist vorzugsweise dazu eingerichtet, das Gehäuse nach außen hin zu verschließen und abzudichten. Bevorzugt erfüllt die Abschlussscheibe keine lichttechnische Funktion für den Kraftfahrzeugscheinwerfer.

Es kann vorgesehen sein, dass die Kontaktfläche einen geschlossenen Pfad ausbildet, welcher um die erste Durchgangsöffnung, und vorzugsweise um die zweite Durchgangsöffnung, herum verläuft. Vorzugsweise kontaktiert die Kontaktfläche der Blende die Außenseite der Abschlussscheibe vollflächig.

Es kann vorgesehen sein, dass das Dichtungselement entlang des geschlossenen Pfads verläuft. Vorzugsweise umfasst das Dichtungselement eine Dichtung oder eine Dichtungsmasse, welche an der gesamten Kontaktfläche angebracht ist, um den Kontaktbereich zwischen der Blende und der Außenseite der Abschlussscheibe gegen Fluide abzudichten.

Es kann vorgesehen sein, dass in dem Gehäuse eine Sensorvorrichtung zur optischen Erfassung einer Umgebung des Kraftfahrzeugscheinwerfers angeordnet ist, wobei die Abschlussscheibe ein Sensorsichtfenster aufweist, wobei die Sensorvorrichtung die Umgebung des Kraftfahrzeugscheinwerfers durch das Sensorsichtfenster hindurch erfasst. Die Sensorvorrichtung kann eine Kamera, einen Infrarotsensor oder einen Lasersensor umfassen. Das Sensorsichtfenster und die Abschlussscheibe können einteilig bzw. einstückig ausgebildet sein. Das Sensorsichtfenster und die Abschlussscheibe können ein unterschiedliches Material aufweisen, beispielsweise kann das Sensorsichtfenster aus Glas und die Abschlussscheibe aus Kunststoff gebildet sein. Das Material des Sensorsichtfensters kann eine höhere Härte als das Material der Abschlussscheibe aufweisen.

Es kann vorgesehen sein, dass die Blende derart an der Abschlussscheibe angeordnet ist, dass die erste Durchgangsöffnung und das Sensorsichtfernster derart zueinander angeordnet sind, dass die Erfassung der Umgebung des Kraftfahrzeugscheinwerfers durch das Sensorsichtfenster und durch die erste Durchgangsöffnung hindurch erfolgt. Die erste Durchgangsöffnung und das Sensorsichtfernster können deckungsgleich hintereinander angeordnet sein. Eine die Durchgangsöffnung abbildende Fläche und eine das Sensorsichtfenster abbildende Fläche sind insbesondere parallel zueinander orientiert.

Es kann vorgesehen sein, dass zwischen der Blende und der Abschlussscheibe eine Schutzvorrichtung angeordnet ist, welche dazu eingerichtet ist, vor dem Sensorsichtfenster ein Schutzelement anzuordnen, welches dazu eingerichtet ist, einen Kontakt des Sensorsichtfensters mit ersten und/oder zweiten Partikeln zu verhindern. Das Schutzelement kann zwischen der Blende und der Außenseite der Abschlussscheibe angeordnet sein. Dadurch ergibt sich der Vorteil, dass das Sensorsichtfenster in einem statischen Zustand des Kraftfahrzeugscheinwerfers vor Verunreinigungen geschützt werden kann.

Es kann vorgesehen sein, dass das Schutzelement zwischen einer ersten und einer zweiten Position verschwenkbar oder verschiebbar ausgebildet ist, wobei das Schutzelement in der ersten Position vor dem Sensorsichtfenster abgeordnet ist, um dieses abzudecken, und in der zweiten Position neben dem Sensorsichtfenster angeordnet ist. Dadurch ergibt sich der Vorteil, dass das Sensorsichtfenster, durch das Überführen des Schutzelements von der zweiten in die erste Position, in einem statischen Zustand des Kraftfahrzeugscheinwerfers vor Verunreinigungen geschützt werden kann. Sobald die Erfassung der Umgebung mit der Sensorvorrichtung wieder erforderlich wird, kann das Schutzelement von der ersten in die zweite Position übergeführt werden.

Es kann vorgesehen sein, dass die Blende eine Reinigungsvorrichtung aufweist, welche an der Blende derart angeordnet und dazu eingerichtet ist, ein Reinigungsmittel auf das Sensorsichtfenster aufzubringen. Die Reinigungsvorrichtung kann eine Düse zur Abgabe von Reinigungsmittel und ein mit der Düse flüssigkeitsleitend verbundenes Reinigungsmittelreservoir umfassen, wobei bevorzugt die Düse das Reinigungsmittel auf das Sensorsichtfenster sprüht. Es kann vorgesehen sein, dass das Reinigungsmittel eine Flüssigkeit ist.

Es kann vorgesehen sein, dass die Blende eine Luftabgabevorrichtung aufweist, welche an der Blende derart angeordnet und dazu eingerichtet ist, einen Luftstrom, vorzugsweise Druckluft, abzugeben, wobei der Luftstrom dergestalt abgegeben wird, dass er im Zusammenwirken mit dem Staudruck das Eindringen von ersten Partikeln der ersten Korngrößenverteilung über die erste Durchgangsöffnung in den ersten Hohlraum verhindert. Dadurch ergibt sich der Vorteil, dass mehr erste Partikel an einem Eindringen in den ersten Hohlraum gehindert werden, da der Staudruck und der Luftstrom zusammen gegen die Anströmung der Anströmluft wirken.

Es kann vorgesehen sein, dass der Luftstrom in einer Richtung abgegeben wird, welche der Richtung der Anströmluft, welche den Staudruck ausbildet, im Wesentlichen entgegengesetzt ist oder orthogonal zur Richtung der Anströmluft ist. Als Richtung wird in diesem Fall die Bahnkurve (oder Gerade) bzw. der von den Luftpartikeln zurückgelegte Weg bezeichnet, dem die Luftpartikel während ihrer Bewegung folgen.

Es kann vorgesehen sein, dass die erste Korngrößenverteilung Korngrößen zwischen 1 µm bis 1 mm und die zweite Korngrößenverteilung Korngrößen von >1 mm umfasst. Die ersten Partikel können Staubpartikel umfassen.

Erfindungsgemäß ist ein Kraftfahrzeug vorgesehen, welches einen erfindungsgemäßen Kraftfahrzeugscheinwerfer aufweist.

Im Rahmen dieser Beschreibung sind die Begriffe "oben", "unten", "horizontal", "vertikal" als Angaben der Ausrichtung zu verstehen, wenn der Kraftfahrzeugscheinwerfer in normaler Benutzungsstellung angeordnet ist, nachdem er in einem Kraftfahrzeug eingebaut wurde.

Die Erfindung wird nachstehend anhand von bevorzugten Ausführungsbeispielen, auf die sie jedoch nicht beschränkt sein soll, noch weiter erläutert. In den Zeichnungen zeigt:
Fig. 1 eine schematische Seitenansicht eines erfindungsgemäßen Kraftfahrzeugscheinwerfers;
Fig. 2 eine schematische Seitenansicht einer zweiten Ausführungsform eines erfindungsgemäßen Kraftfahrzeugscheinwerfers;

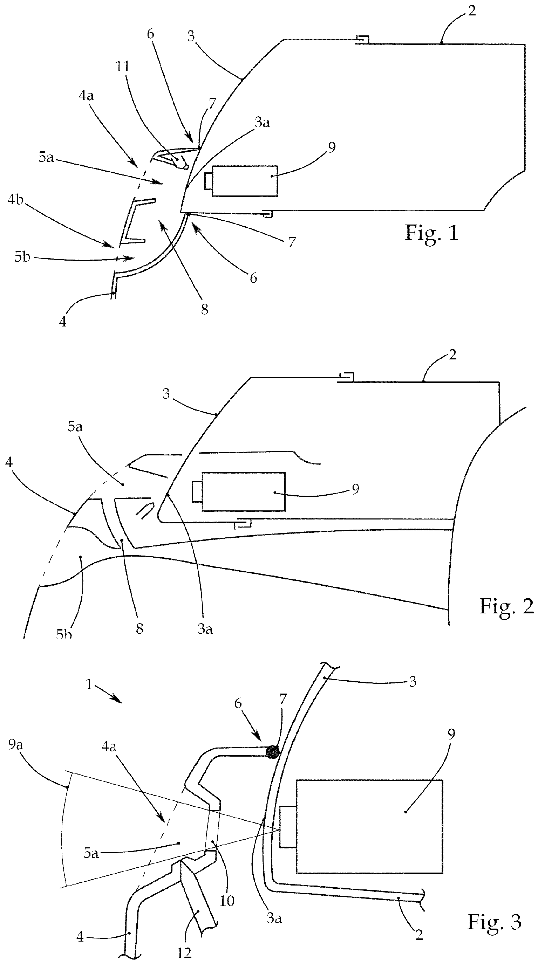

Fig. 2 eine schematische Seitenansicht einer dritten Ausführungsform eines erfindungsgemäßen Kraftfahrzeugscheinwerfers

Für die Erfindung nicht wesentliche Elemente eines Kraftfahrzeugscheinwerfers werden zur Vereinfachung in den Abbildungen nicht gezeigt.

Fig. 1 zeigt einen Kraftfahrzeugscheinwerfer 1 mit einem Gehäuse 2 und einer das Gehäuse 2 abschließende Abschlussscheibe 3, welche eine dem Gehäuse 2 zugewandte Innenseite und eine dem Gehäuse 2 abgewandte Außenseite aufweist. Die Abschlussscheibe 3 kann transparent ausgebildet sein. Der Kraftfahrzeugscheinwerfer 1 hat eine Blende 4, welche an der Außenseite der Abschlussscheibe 3 befestigt ist, wobei die Blende 4 eine der Außenseite der Abschlussscheibe 3 zugewandte Rückseite und eine der Außenseite der Abschlussscheibe 3 abgewandte Vorderseite aufweist. Die Blende 4 ist derart ausgestaltet, dass zwischen der Blende 4 und der Abschlussscheibe 3 ein erster Hohlraum 5a ausgebildet ist. Die Rückseite der Blende 4 weist eine Kontaktfläche 6 auf, über welche die Blende 4 die Außenseite der Abschlussscheibe 3 kontaktiert, wobei zwischen der Kontaktfläche und der Außenseite der Abschlussscheibe 3 ein Dichtungselement 7 angeordnet ist. Das Dichtungselement 7 ist dazu eingerichtet, den Kontakt zwischen der Blende 4 und der Außenseite der Abschlussscheine 3 luftdicht abzuschließen.

Die Blende 4 weist eine erste Durchgangsöffnung 4a auf, welche in den ersten Hohlraum 5a führt, wobei die erste Durchgangsöffnung 4a derart ausgebildet ist, dass sich durch eine auf die Blende 4 strömende Anströmluft, in einem Bereich vor der ersten Durchgangsöffnung 4a, ein Staudruck ausbildet, wobei der Staudruck das Eindringen von ersten Partikeln, welche eine erste Korngrößenverteilung aufweisen, über die erste Durchgangsöffnung 4a in den ersten Hohlraum 5a verhindert.

Die Blende 4 ist derart ausgestaltet, dass zwischen der Blende 4 und der Abschlussscheibe 3 ein zweiter Hohlraum 5b ausgebildet ist, welcher vertikal unterhalb des ersten Hohlraums 5a angeordnet ist. In den zweiten Hohlraum 5b führt eine zweite Durchgangsöffnung 4b, welche an der Blende 4 vertikal unterhalb der ersten Durchgangsöffnung 4a angeordnet. Der erste 5a und der zweite Hohlraum 5b sind über einen Leitkanal 8 miteinander verbunden. Die erste Durchgangsöffnung 4a, der Leitkanal 8 und die zweite Durchgangsöffnung 4b sind dergestalt ausbildet und dazu eingerichtet, dass zweite Partikel, welche eine zweite Korngrößenverteilung, welche größer als die erste Korngrößenverteilung ist, aufweisen und über die erste Durchgangsöffnung 4a in den ersten Hohlraum 5a eindringen, gravitationsbedingt durch den Leitkanal 8 in den zweiten Hohlraum 5b, zu der zweiten Durchgangsöffnung 4b, geleitetet werden und über die zweite Durchgangsöffnung 4b aus dem zweiten Hohlraum 5b ausdringen bzw. den zweiten Hohlraum 5b über die zweite Durchgangsöffnung 4b verlassen.

Die erste Korngrößenverteilung umfasst Korngrößen zwischen 1 µm bis 1 mm und die zweite Korngrößenverteilung Korngrößen von >1 mm.

Die Kontaktfläche 6, über welche die Blende 4 die Außenseite der Abschlussscheibe 3 kontaktiert, kann einen geschlossenen Pfad ausbilden, welcher um die erste Durchgangsöffnung 4a, und vorzugsweise um die zweite Durchgangsöffnung 4b, herum verläuft. Das Dichtungselement 7 verläuft entlang des geschlossenen Pfads und kann eine Dichtung oder Dichtungsmasse aufweisen.

In dem in Fig. 1, 2 und 3 gezeigten Gehäuse 2 ist eine Sensorvorrichtung 9 zur optischen Erfassung einer Umgebung des Kraftfahrzeugscheinwerfers 1 angeordnet, wobei die Abschlussscheibe 3 ein Sensorsichtfenster 3a aufweist und die Sensorvorrichtung 9 die Umgebung des Kraftfahrzeugscheinwerfers 1 durch das Sensorsichtfenster 3a hindurch erfasst. Das Sensorsichtfenster 3a umfasst vorzugsweise ein transparentes Material. In Fig. 3 ist ein Sensorerfassungsfeld mit 9a schematisch angedeutet, wobei die Sensorvorrichtung 9 die Umgebung des Kraftfahrzeugscheinwerfers, welche innerhalb des Sensorerfassungsfelds 9a liegt, erfassen kann.

Die Blende 4 ist derart an der Abschlussscheibe 3 angeordnet, dass die erste Durchgangsöffnung 4a und das Sensorsichtfernster 9 derart zueinander angeordnet sind, dass die Erfassung der Umgebung des Kraftfahrzeugscheinwerfers 1 durch das Sensorsichtfenster 3a und durch die erste Durchgangsöffnung 4a hindurch erfolgt.

Wie in Fig. 1 gezeigt, weist die Blende 4 eine Reinigungsvorrichtung 11 auf, welche an der Blende 4 derart angeordnet und dazu eingerichtet ist, ein Reinigungsmittel auf das Sensorsichtfenster 3a aufzubringen, wobei das Reinigungsmittel bevorzugt flüssig ist. Die in den Fig. 2 und 3 gezeigten Ausführungsbeispiele können ebenfalls eine Reinigungsvorrichtung 11 aufweisen.

In dem in Fig. 2 gezeigten Ausführungsbeispiel ist der zweite Hohlraum 5b als Strömungskanal ausgebildet, welcher sich von der zweiten Durchgangsöffnung 4b zumindest bis zur Abschlussscheibe 3 hin erstreckt. Bevorzugt verläuft der Strömungskanal, beginnend von der Blende 4, vertikal unterhalb der Abschlussscheibe 3 und vertikal unterhalb des Gehäuses 2. Der Strömungskanal hat eine Verjüngung, wobei der Leitkanal 8 mit dem Strömungskanal an der Verjüngung luftleitend verbunden ist, um eine Venturidüse auszubilden. Die Venturidüse ist dazu eingerichtet, an der ersten Durchgangsöffnung 4a eine Sogwirkung zu erzeugen, um Partikel der ersten und/oder zweiten Korngrößenverteilung aus dem ersten Hohlraum 5a abzusaugen.

In dem in Fig. 3 gezeigten Ausführungsbeispiel ist zwischen der Blende 4 und der Abschlussscheibe 3 eine Schutzvorrichtung angeordnet, welche dazu eingerichtet ist, vor dem Sensorsichtfenster 3a ein Schutzelement 10 anzuordnen, welches dazu eingerichtet ist, einen Kontakt des Sensorsichtfensters 3a mit ersten und/oder zweiten Partikeln zu verhindern. Die Schutzvorrichtung umfasst ein Schutzelement 10 und eine (nicht gezeigte) mechanische Vorrichtung zur Verschwenkung und/oder Verschiebung des Schutzelements 10. Das Schutzelement 10 ist mittels der mechanischen Vorrichtung zwischen einer ersten und einer zweiten Position verschwenkbar und/oder verschiebbar ausgebildet, wobei das Schutzelement 10 in der ersten Position vor dem Sensorsichtfenster 3a angeordnet ist, um dieses abzudecken. In Fig. 3 ist das Schutzelement 10 vor dem Sensorsichtfenster 3a angeordnet. Damit ist das Sensorsichtfenster 3a vor Verunreinigungen geschützt. In der zweiten Position ist das Schutzelement 10 neben dem Sensorsichtfenster 3a angeordnet, sodass das Schutzelement 10 das Sensorsichtfenster 3a nicht verdeckt. Das Schutzelement 10 kann plattenförmig ausgebildet sein. Das Schutzelement 10 kann transparent ausgebildet sein. Vorzugsweise ist die Form des Schutzelements 10 im Wesentlichen deckungsgleich mit der Form des Sensorsichtfensters 3a. Die in den Fig. 1 und 2 gezeigten Ausführungsbeispiele können ebenfalls eine Schutzvorrichtung aufweisen.

In dem in Fig. 3 gezeigten Ausführungsbeispiel weist die Blende 4 eine Luftabgabevorrichtung 12 auf, welche an der Blende 4 derart angeordnet und dazu eingerichtet ist, einen Luftstrom, vorzugsweise Druckluft, abzugeben, wobei der Luftstrom dergestalt abgegeben wird, dass er im Zusammenwirken mit dem Staudruck das Eindringen von ersten Partikeln der ersten Korngrößenverteilung über die erste Durchgangsöffnung 4a in den ersten Hohlraum 5a verhindert. Der Luftstrom wird in einer Richtung abgegeben, welche der Richtung der Anströmluft, welche den Staudruck ausbildet, im Wesentlichen entgegengesetzt oder orthogonal dazu ist. Die in den Fig. 1 und 2 gezeigten Ausführungsbeispiele können ebenfalls eine Luftabgabevorrichtung 12 aufweisen.

In dem in Fig. 3 gezeigten Ausführungsbeispiel weist die Blende 4 nur einen Hohlraum 5a mit einer Durchgangsöffnung 4a auf.

In den Fig. 1, 2 und 3 sind die Durchgangsöffnungen, zur besseren Übersicht, strichliert angedeutet.

## Patentansprüche

1. Kraftfahrzeugscheinwerfer (1), umfassend:
- ein Gehäuse (2),
- eine das Gehäuse (2) abschließende Abschlussscheibe (3), welche eine dem Gehäuse (2) zugewandte Innenseite und eine dem Gehäuse (2) abgewandte Außenseite aufweist,
- eine Blende (4), welche an der Außenseite der Abschlussscheibe (3) befestigt ist, wobei die Blende (4) eine der Außenseite der Abschlussscheibe (3) zugewandte Rückseite und eine der Außenseite der Abschlussscheibe (3) abgewandte Vorderseite aufweist, wobei die Blende (4) derart ausgestaltet ist, dass zwischen der Blende (4) und der Abschlussscheibe (3) ein erster Hohlraum (5) ausgebildet ist, wobei die Rückseite der Blende (4) eine Kontaktfläche (6) aufweist, über welche die Blende (4) die Außenseite der Abschlussscheibe (3) kontaktiert, wobei zwischen der Kontaktfläche (6) und der Außenseite der Abschlussscheibe (3) ein Dichtungselement (7) angeordnet ist, welches dazu eingerichtet ist, den Kontakt zwischen der Blende (4) und der Außenseite der Abschlussscheine (3) luftdicht abzuschließen,
**dadurch gekennzeichnet, dass**
die Blende (4) eine erste Durchgangsöffnung (4a) aufweist, welche in den ersten Hohlraum (5a) führt, wobei die erste Durchgangsöffnung (4a) derart ausgebildet ist, dass sich durch eine auf die Blende (4) strömende Anströmluft, in einem Bereich vor der ersten Durchgangsöffnung (4a), ein Staudruck ausbildet, wobei der Staudruck das Eindringen von ersten Partikeln, welche eine erste Korngrößenverteilung aufweisen, über die erste Durchgangsöffnung (4a) in den ersten Hohlraum (5a) verhindert.

2. Kraftfahrzeugscheinwerfer (1) nach Anspruch 1, wobei die Blende (4) derart ausgestaltet ist, dass zwischen der Blende (4) und der Abschlussscheibe (3) ein zweiter Hohlraum (5b) ausgebildet ist, welcher vertikal unterhalb des ersten Hohlraums (5a) angeordnet ist, wobei die Blende (4) eine zweite Durchgangsöffnung (4b) aufweist, welche vertikal unterhalb der ersten Durchgangsöffnung (4a) angeordnet ist und in den zweiten Hohlraum (5b) führt, wobei der erste (5a) und der zweite Hohlraum (5b) über einen Leitkanal (8) miteinander verbunden sind, wobei die erste Durchgangsöffnung (4a), der Leitkanal (8) und die zweite Durchgangsöffnung (4b) dergestalt ausbildet und dazu eingerichtet sind, dass zweite Partikel, welche eine zweite Korngrößenverteilung, welche größer als die erste Korngrößenverteilung ist, aufweisen und über die erste Durchgangsöffnung (4a) in den ersten Hohlraum (5a) eindringen, gravitationsbedingt durch den Leitkanal (8) in den zweiten Hohlraum (5b), zu der zweiten Durchgangsöffnung (4b), geleitetet werden und über die zweite Durchgangsöffnung (4b) aus dem zweiten Hohlraum (5b) ausdringen.

3. Kraftfahrzeugscheinwerfer (1) nach einem der vorhergehenden Ansprüche, wobei der zweite Hohlraum (5b) als Strömungskanal ausgebildet ist, welcher sich von der zweiten Durchgangsöffnung (4b) zumindest bis zur Abschlussscheibe (3) hin erstreckt, wobei der Strömungskanal eine Verjüngung aufweist, wobei der Leitkanal (8) mit dem Strömungskanal an der Verjüngung luftleitend verbunden ist, um eine Venturidüse auszubilden, welche dazu eingerichtet ist, an der ersten Durchgangsöffnung (4a) eine Sogwirkung zu erzeugen, um Partikel der ersten und/oder zweiten Korngrößenverteilung aus dem ersten Hohlraum (5a) abzusaugen.

4. Kraftfahrzeugscheinwerfer (1) nach einem der vorhergehenden Ansprüche, wobei die Abschlussscheibe (3) transparent ausgebildet ist.

5. Kraftfahrzeugscheinwerfer (1) nach einem der vorhergehenden Ansprüche, wobei die Kontaktfläche (6) einen geschlossenen Pfad ausbildet, welcher um die erste Durchgangsöffnung (4a), und vorzugsweise um die zweite Durchgangsöffnung (4b), herum verläuft.

6. Kraftfahrzeugscheinwerfer (1) nach Anspruch 5, wobei das Dichtungselement (7) entlang des geschlossenen Pfads verläuft.

7. Kraftfahrzeugscheinwerfer (1) nach einem der vorhergehenden Ansprüche, wobei in dem Gehäuse (2) eine Sensorvorrichtung (9) zur optischen Erfassung einer Umgebung des Kraftfahrzeugscheinwerfers (1) angeordnet ist, wobei die Abschlussscheibe (3) ein Sensorsichtfenster (3a) aufweist, wobei die Sensorvorrichtung (9) die Umgebung des Kraftfahrzeugscheinwerfers (1) durch das Sensorsichtfenster (3a) hindurch erfasst.

8. Kraftfahrzeugscheinwerfer (1) nach Anspruch 7, wobei die Blende (4) derart an der Abschlussscheibe (3) angeordnet ist, dass die erste Durchgangsöffnung (4a) und das Sensorsichtfernster (3a) derart zueinander angeordnet sind, dass die Erfassung der Umgebung des Kraftfahrzeugscheinwerfers (1) durch das Sensorsichtfenster (3a) und durch die erste Durchgangsöffnung (4a) hindurch erfolgt.

9. Kraftfahrzeugscheinwerfer (1) nach Anspruch 7 oder 8, wobei zwischen der Blende (4) und der Abschlussscheibe (3) eine Schutzvorrichtung angeordnet ist, welche dazu eingerichtet ist, vor dem Sensorsichtfenster (3a) ein Schutzelement (10) anzuordnen, welches dazu eingerichtet ist, einen Kontakt des Sensorsichtfensters (3a) mit ersten und/oder zweiten Partikeln zu verhindern.

10. Kraftfahrzeugscheinwerfer (1) nach Anspruch 9, wobei das Schutzelement (10) zwischen einer ersten und einer zweiten Position verschwenkbar oder verschiebbar ausgebildet ist, wobei das Schutzelement (10) in der ersten Position vor dem Sensorsichtfenster (3a) abgeordnet ist, um dieses abzudecken, und in der zweiten Position neben dem Sensorsichtfenster (3a) angeordnet ist.

11. Kraftfahrzeugscheinwerfer (1) nach einem der Ansprüche 7 bis 10, wobei die Blende (4) eine Reinigungsvorrichtung (11) aufweist, welche an der Blende derart angeordnet und dazu eingerichtet ist, ein Reinigungsmittel auf das Sensorsichtfenster (3a) aufzubringen, wobei vorzugsweise das Reinigungsmittel eine Flüssigkeit ist.

12. Kraftfahrzeugscheinwerfer (1) nach einem der vorhergehenden Ansprüche, wobei die Blende (4) eine Luftabgabevorrichtung (12) aufweist, welche an der Blende (4) derart angeordnet und dazu eingerichtet ist, einen Luftstrom, vorzugsweise Druckluft, abzugeben, wobei der Luftstrom dergestalt abgegeben wird, dass er im Zusammenwirken mit dem Staudruck das Eindringen von ersten Partikeln der ersten Korngrößenverteilung über die erste Durchgangsöffnung (4a) in den ersten Hohlraum (5a) verhindert.

13. Kraftfahrzeugscheinwerfer (1) nach Anspruch 12, wobei der Luftstrom in einer Richtung abgegeben wird, welche der Richtung der Anströmluft, welche den Staudruck ausbildet, im Wesentlichen entgegengesetzt ist oder orthogonal zur Richtung der Anströmluft ist.

14. Kraftfahrzeugscheinwerfer (1) nach einem der vorhergehenden Ansprüche, wobei die erste Korngrößenverteilung Korngrößen zwischen 1 µm bis 1 mm und die zweite Korngrößenverteilung Korngrößen von >1 mm umfasst.

15. Kraftfahrzeug, umfassend einen Kraftfahrzeugscheinwerfer (1) nach einem der vorhergehenden Ansprüche.
